# EUROPÄISCHE PATENTSCHRIFT

(11) **EP 2 964 541 B1**
(45) Veröffentlichungstag und Bekanntmachung des Hinweises auf die Patenterteilung: **25.01.2017**
(21) Anmeldenummer: 14708804.1
(22) Anmeldetag: 05.03.2014
(51) Int. Cl.: B65D 77/06

(54) **PALETTENCONTAINER**
PALLET CONTAINER
CONTENEUR SUR PALETTE

(30) Priorität: 05.03.2013 DE 202013002053 U; 12.08.2013 DE 202013007403 U; 27.09.2013 US 201361883582 P
(43) Veröffentlichungstag der Anmeldung: 13.01.2016
(73) Patentinhaber: Mauser-Werke GmbH, 50321 Brühl (DE); IBA Intermediate Bulk Alliance GmbH, 49453 Rehden (DE)
(72) Erfinder: SIEBEL, Sascha, 49356 Diepholz (DE)
(86) Internationale Anmeldenummer: PCT/EP2014/000559
(87) Internationale Veröffentlichungsnummer: WO 2014/135275

(56) Entgegenhaltungen:
- EP-A1- 1 103 486
- EP-A2- 0 941 946
- EP-B1- 2 149 508
- WO-A1-2007/029011
- GB-A- 2 268 231
- JP-A- 2004 182 275
- US-A- 4 138 036
- US-A1- 2005 040 063
- US-A1- 2005 145 521
- US-A1- 2006 175 385
- US-A1- 2008 067 176
- US-A1- 2008 310 766

## Beschreibung

Die vorliegende Erfindung betrifft einen Palettencontainer zur Lagerung und zum Transport von aseptischen flüssigen Füllgütern, mit einer Bodenpalette, einem darauf befestigten Gitterrahmen aus Metallstäben und einem darin eingehängten Gewebesack bzw. einer kubusförmigen Gewebehülle, in der ein bei Befüllung selbstentfaltender flüssigkeitsdichter Inliner aus Kunststoff- und/oder Metallfolie zur Aufnahme des flüssigen Füllguts angeordnet ist, wobei der Inliners einen bodenseitigen Befüll- und Entnahmestutzen aufweist, auf den eine unten am vorderen Gitterrahmen befestigte Befüll- und Entnhmearmatur aufgesetzt ist, durch die der zusammengefaltete Inliner erst beim Befüllvorgang entfaltet und aufgerichtet wird.

Ein derartiger Palettencontainer ist z. B. aus der EP 2 149 508 B1 vorbekannt. Bei diesem Palettencontainer ist der innere flüssigkeitsaufnehmende Inliner austauschbar ausgebildet, wozu die äußere Gewebehülle oben mit einer großen verschließbaren Klappenöffnung versehen ist, durch die der Inliner ausgetauscht werden kann. Ein Nachteil des bekannten Palettencontainers ist, dass insbesondere zähfließende Füllgüter nur langsam entleert werden können. Speziell hochviskoses Füllgut wie z. B. Fruchtkonzentrat mit Fruchtstücken für die Marmeladenherstellung fließt nicht von allein über die Entnahmearmatur ab. Ein weiterer Nachteil des bekannten Palettencontainers ist, dass der Inliner bei Befüllung unter Druck Falten wirft, die später die Entleerung verzögern können, insbesondere indem sie die Öffnung des Entnahmestutzens versperren können.

Bei weiteren bekannten Palettenbehältern (EP 1 103 486 A1, WO 2007/029011 A1) ist der Inliner an der äußeren Hülle befestigt, so dass Inliner und äußere Hülle nur in den Gitterkäfig gespannt werden können, wenn Luft in den Inliner gelangt.

Bei Palettencontainern, die für eine Befüllung mit aseptischen Füllgütern vorgesehen sind, muss aber unbedingt verhindert werden, dass das empfingdliche Füllgut mit Luft (Verunreinigungen, Bakterien, Keime) in Berührung kommt. Daher sind die füllgutaufnehmenden Inliner vor dem Befüllvorgang luftleer (vakuumiert) und werden erst beim Befüllen von dem flüssigen Füllgut entfaltet und aufgerichtet.

Die bekannten Palettencontainer (EP 1 103 486 A1, WO 2007/029011 A1) sind daher für die Befüllung mit aseptischen Füllgütern ungeeignet. Darüber hinaus können auch aus diesen bekannten Behältern zähfließende Füllgüter nur langsam entleert werden.

Auch ein bekanntes Bag in Box-System (US 2008/0067176 A1) verfügt über keine Vorrichtung zur Erleichterung der Entleerung zähflüssiger Füllgüter.

Es ist Aufgabe der vorliegenden Erfindung, einen Palettencontainer der eingangs genannten Gattung vorzuschlagen, bei dem die Entleerung des flüssigen Füllguts, insbesondere wenn es sich um zähfließendes Füllgut handelt, beschleunigt werden kann, wobei weiterhin sichergestellt ist, dass die Entleerung nicht durch eine mögliche Faltenbildung des Inliners gestört und behindert werden kann.

Diese Aufgabe wird gemäß den kennzeichnenden Merkmalen des Patentanspruchs 1 gelöst. Der innerhalb der kubusförmigen Gewebehülle angeordnete Inliner ist für eine gasunterstützte Entleerung als Doppelkammer-Inliner mit einer hinteren Kammer zum Einblasen von Druckluft oder Gas (im Folgenden "Druckluftkammer") und einer vorderen Kammer zur Aufnahme des flüssigen Füllguts (im Folgenden "Füllgutkammer") ausgebildet.

Der Doppelkammer-Inliner wird im Folgenden z. T. auch kurz als "Inliner" bezeichnet. Für das entleerungsfördernde Einblasen von Druckluft ist vorgesehen, dass die Druckluftkammer auf ihrer Oberseite mit einem kleinen Stutzen zum Anschließen einer Druckluftleitung versehen ist, wobei die vordere Füllgutkammer auf ihrer Vorderseite einen bodenseitigen Befüll- und Entnahmestutzen zum Aufsetzten einer Befüll- und Entnahmearmatur (die Befüll- und Entnahmearmatur wird im Folgenden auch kurz "Bodenventil" genannt) aufweist.

Damit das sensible Füllgut mit der Druckluft nur in Wirkkontakt aber nicht in direkten Kontakt kommen kann - das würde eine Verunreinigung des aseptischen Füllguts verursachen - ist innerhalb des Doppelkammer-Inliners zwischen der Druckluftkammer und der Füllgutkammer eine nachgiebige elastische Folienwand als Trennwandung vorgesehen.

Diese Trennwandung verläuft im unbefüllten Zustand des Palettencontainers bei aufgespannter Gewebehülle vertikal innerhalb des Doppelkammer-Inliners von dessen Oberseite zu dessen Unterseite.

Durch diese zweckmäßige Ausgestaltung ergibt sich in vorteilhafter Weise, dass im befüllten Zustand des Palettencontainers die Füllgutkammer voll mit flüssigem Füllgut befüllt und die Druckluftkammer vollständig leer ist, während im entleerten Zustand des Palettencontainers die Füllgutkammer vollständig leer und die Druckluftkammer vollständig mit Druckluft befüllt ist, wobei die Trennwandung zwischen der Druckluftkammer und der Füllgutkammer im befüllten Zustand des Palettencontainers vollständig an der Rückseite des Doppelkammer-Inliners und im entleerten Zustand des Palettencontainers vollständig an der Vorderseite des Doppelkammer-Inliners anliegt.

Die erfindungsgemäßen kostengünstigen Palettencontainer sollen anstelle von teuren Edelstahl-IBCs eingesetzt werden. Die Abfüllanlagen für IBCs bei den Füllgutherstellern (Abfüller) arbeiten mit vergleichsweise hohem Fülldruck, so dass das flüssige Füllgut mit scharfem Strahl durch die bodenseitige Befüll- und Entleerungsarmatur in den Inliner einströmt. Dies führt bei herkömmlichen Palettencontainern mit Folien-Inlinern regelmäßig dazu, dass sich im Boden des Folien-Inliners Falten bilden und sich die Ecken einziehen. Solche Falten sind dann bei der Füllgutentnahme durch die bodenseitige Befüll- und Entnahmearmatur störend und können innenseitig die Entnahmeöffnung versperren.
Um dies zu verhindern ist innerhalb der Gewebehülle direkt unterhalb des Doppelkammer-Inliners eine dünne steife Bodenplatte angeordnet, auf welcher der Doppelkammer-Inliner fixiert ist.

Zudem ist der erfindungsgemäße Palettencontainer mit einer Restentleerungshilfe ausgestattet, die sicherstellt, dass auch geringste Mengen an - selbst hochviskosem - Füllgut noch aus dem Inliner herausgesaugt werden können, ohne dass die Gefahr besteht, dass sich durch den starken Absaug-Unterdruck die Folie des Inliners vor die Öffnung des Entnahmestutzens ziehen könnte.

Die Erfindung wird nachfolgend anhand von in den Zeichnungen schematisch dargestellten Ausführungsbeispielen näher erläutert und beschrieben. Es zeigen:
- Figur 1: in Gesamtansicht einen erfindungsgemäßen Palettencontainer mit eingehängter Gewebehülle und austauschbarem Inliner,
- Figur 2: einen erfindungemäßen Palettencontainer mit eingehängter Gewebehülle und Aufschnittdarstellung des dünnwandigen Inliners,
- Figur 3: die besondere Einfaltung eines doppelwandigen Inliners für eine gasunterstützte Entleerung eines erfindungemäßen Palettencontainers
- Figur 4: den Vorgang der gasunterstützten Entleerung eines erfindungemäßen Palettencontainers
- Figur 5: in perspektivischer Darstellung eine rohrförmige Restentleerungshilfe und
- Figur 6: in Seitenansicht die Restentleerungshilfe gemäß Figur 5.

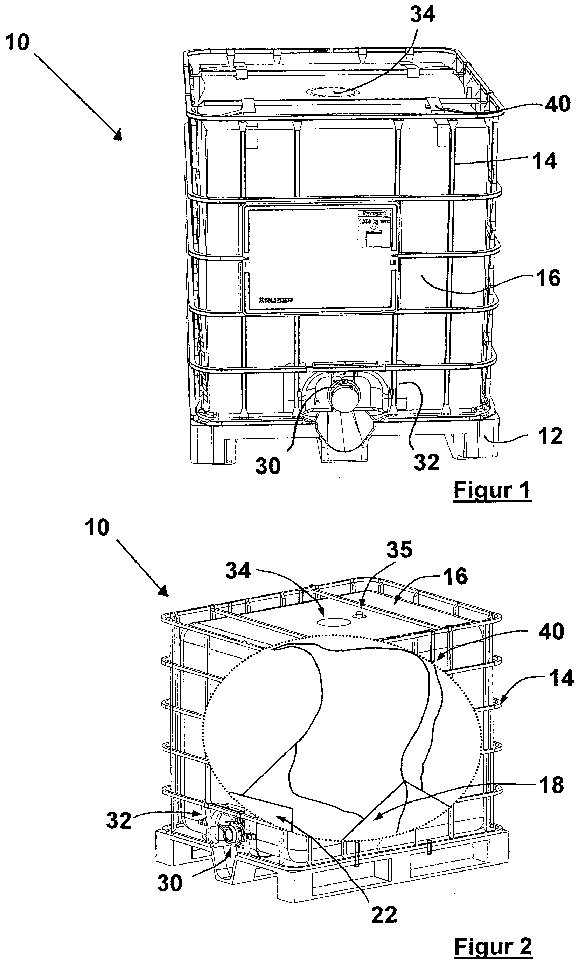

In Figur 1 ist ein erfindungsgemäßer Palettencontainer 10 mit Bodenpalette 12, Gitterrahmen 14 und eingehängter Gewebehülle 16 mit innenseitigem Inliner 18 dargestellt.

In Figur 2 ist der konstruktive Aufbau des erfindungemäßen Palettencontainers 10 dargestellt. Der erfindungsgemäße Palettencontainer 10 ist folgendermaßen gestaltet:

Der Gitterrahmen 14 mit seiner fest verbundenen Bodenpalette 12 dient der Lade- und Transporthandhabung. Er kann von Flurförderfahrzeugen gehoben und transportiert werden und hat sich bereits bei Standard IBC mit PE-Blase bewährt. Die Gewebehülle 16 mit inne liegendem Inliner 18 wird per Definition als Moduleinheit bezeichnet. Die Moduleinheit erfüllt zwei Aufgaben. Zum einen werden mit der Festigkeit und Elastizität der äußeren Gewebehülle 16 die auftretenden statischen und dynamischen Kräfte aufgenommen und zum anderen dient der innenseitige Inliner 18 für die Gas- und Flüssigkeitsdichtigkeit des gesamten Gebindes. Die Gewebehülle 16 wird durch die vier Gurte 40 in dem Gitterrahmen 14 aufgespannt. Im ungefüllten Zustand liegt der Inliner 18 auf dem Boden der Gewebehülle 16 und hat in diesem Zustand kein Füllvolumen. Der Inliner 18 ist für eine gasunterstützte Entleerung als Doppelkammer-Inliner ausgebildet. Auf der Oberseite des Inliners 18 ist ein Gasanschluss 35 zur gasunterstützten Entleerung angebracht. Dieser Gasanschluss 35 ist oben an der Gewebehülle 16 befestigt, er hat aber keinen Einfluss auf die Entfaltung des Inliners 18 während der Befüllung. Der Befüll- und Entnahmestutzen 28 wird durch die Adapterplatte 32 an dem Gitterrahmen 14 fixiert. Die Adapterplatte 32 hat eine Mulde nach innen und sorgt damit für die nötige Positionierung des Befüll- und Entnahmestutzens 28 mit aufgesetzter Befüll- und Entnahmearmatur 30, damit diese nicht über die Projektionsfläche des Gitterrahmens 14 nach außen vorsteht. Die Adapterplatte 32 ermöglicht einen leichten Anschluss der Befüll- und Entnahmearmatur 30 an bestehende Füll- und Entleerungsanlagen. Der Inliner 18 besitzt eine spezielle Faltung und ist auf einer Bodenplatte 20 fixiert, zum Beispiel mittels doppelseitigen Klebebands. Die Bodenplatte 20 befindet sich unter dem Inliner 18 und im Ventilbereich auch vor dem Inliner 18. Die Bodenplatte 20 ist nicht in der Gewebehülle 16 fixiert. Sie wird lediglich über die Grundfläche innerhalb des Gitterrahmens 14 und die Adapterplatte 32 positioniert. Die Funktion der Bodenplatte 20 schließt auch den Schutz des Inliners 18 gegen Durchdringung spitzer Gegenstände von unten und die horizontale Abstützung bei großen Füllgeschwindigkeiten ein. Der Zugang zu dem Innenvolumen des Inliners 18 erfolgt über die Befüll- und Entnahmearmatur 30, wobei das Volumen des Inliners 18 in ungefülltem Zustand null und in gefülltem Zustand dem des Füllguts entspricht. Begrenzt wird das Volumen des Inliners 18 durch das der Gewebehülle 16. Optional kann auf der Oberseite des Inliners 18 ein Entgasungsstutzen angebracht sein. Soll das Füllgut durch ein Gas vor der Entnahme aufgerührt werden, so muss die Gasmenge, die das Volumen der Gewebehülle 16 überschreitet, über den Entgasungsstutzen abgelassen werden. Dazu wird als irreversibler Zugang das Sichtfenster 34 geöffnet bzw. aufgeschnitten und ein Sterilfilter auf den Entgasungsstutzen aufgeschraubt. Die Befüll- und Entnahmearmatur 30 wird durch die Adapterplatte 32 an dem Gitterrahmen 14 fixiert. Die Adapterplatte 32 sorgt für den nötigen Abstand der Befüll- und Entnahmearmatur 30. Diese darf nicht über die Projektionsfläche des Gitterrahmens 14 über stehen. Die Adapterplatte 32 ermöglicht einen leichten Anschluss der Befüll- und Entnahmearmatur 30 an Füll- und Entleerungsanlagen. Marktübliche Füllkanonen können durch ihre Geometrie direkt an die Befüll- und Entnahmearmatur 30 angeschlossen werden. Der Inliner 18 stellt sich während der Befüllung von alleine auf. Eine Manipulation von außen durch den Abfüller ist weder erforderlich, noch gewünscht, noch durch die geschlossene Gewebehülle 16 möglich.

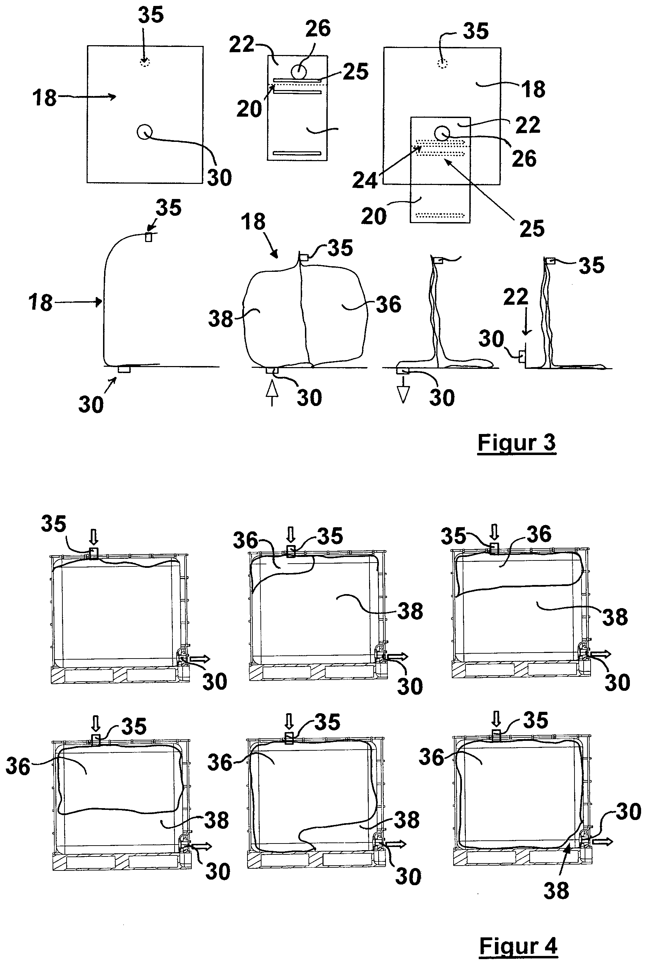

Die besondere Einfaltung dieses Doppelkammer-Inliners 18 und Positionierung auf der Bodenplatte 20 für eine gasunterstützte Entleerung eines befüllten Palettencontainers 10 ist in Figur 3 schematisch dargestellt. Der Inliner 18 ist flach gefaltet und auf der Bodenplatte 20 fixiert. Die Trennwand innerhalb des Doppelkammer-Inliners 18 ist im unbefüllten Zustand bei eingehängter Gewebehülle 16 von dessen Oberseite zu dessen Unterseite vertikal verlaufend ausgebildet, wobei der Gasanschluss 35 oben an der Gewebehülle 16 fixiert ist.

Figur 4 zeigt den Vorgang dieser gasunterstützten Entleerung in entsprechender Bildfolge. Die Trennwand des Doppelkammer-Inliners 18 steht vertikal in der Gewebehülle16. Durch das Einleiten eines Gases oder Gasgemischs (zum Beispiel Stickstoff, Inertgas, Pressluft) mit einem Arbeitsdruck von unter 500 mbar in die Druckluftkammer 36 auf der dem Befüll- und Entnahmestutzen 28 entgegengesetzten Seite bildet sich eine Arbeitsblase, die das Volumen des ausfließenden Füllguts durch Luft oder Gas ersetzt. Das Gesamtvolumen in der Gewebehülle 16 bleibt dabei konstant. Das Volumen der Gasblase wird auch durch die zur Verfügung stehende Folie begrenzt. Es entsteht eine Zugkraft auf die Folie, die die letzten ca. 20% der Flüssigkeit anhebt und in die Richtung des Befüll- und Entnahmestutzens 28 drückt. Ein zusätzlicher Effekt ist, dass der Innendruck einen Überdruck am Bodenventil 30 verursacht und trotz des Pumpenunterdrucks der Inliner 18 im Bereich des Bodenventils 30 nicht kollabiert. Ein weiterer Vorteil ist das erleichterte bzw. unterstützte Austreten der Flüssigkeit. Oft sind die eingesetzten Pumpen nicht selbst ansaugend.

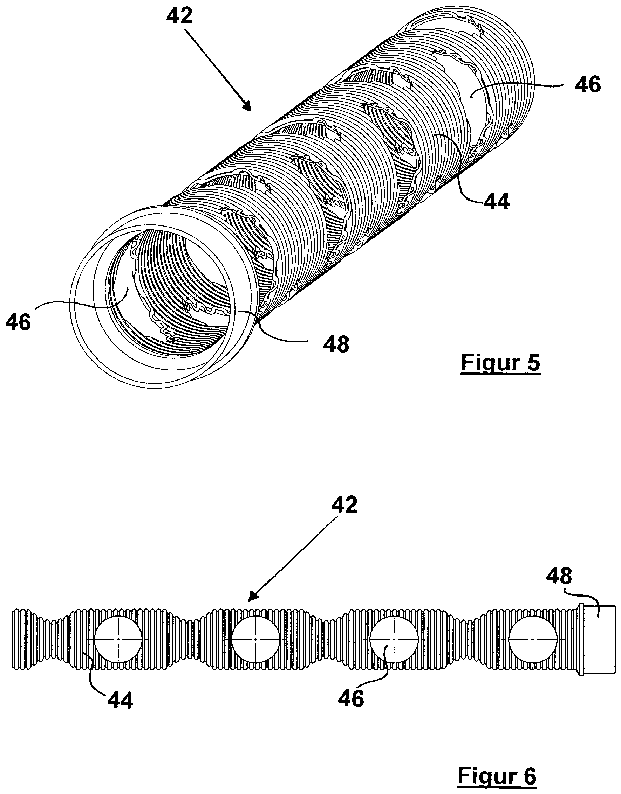

Figur 5 zeigt eine rohrförmige Restentleerungshilfe 42 in perspektivischer Darstellung und Figur 6 die Seitenansicht der Restentleerungshilfe 42.

Für ein optimales Funktionieren des erfindungsgemäßen Palettencontainers 10 mit eingesetzter Moduleinheit beim Befüllen und Entfalten des Inliners 18 in der Abfüllanlage bei einem Abfüller sowie beim Absaugen des flüssigen Füllguts beim Kunden (= Entleerer) ist der Inliner 18 innenseitig vor der Öffnung des bodenseitigen Entnahmestutzens 28 mit einem besonderen Mittel zur verbesserten Restentleerung des Füllguts ausgestattet. Dieses Mittel zur verbesserten Restentleerung des Füllguts besteht aus einer kurzen rohrförmigen Restentleerungshilfe 42, die als flexibles, aus dünnem Kunststoffmaterial bestehendes Wellrohr 44 mit einer Vielzahl von seitlichen Bohrungen 46 ausgebildet ist, wie in Figur 6 dargestellt ist. Das dünnwandige Wellrohr 44 hat eine Wandstärke von ca. 1 mm, eine Länge von etwa 300 bis 500, vorzugsweise 400 mm, und einen Durchmesser von 35 bis 57 mm, passend auf einen 2"-Anschluss. Es wird durch den Befüll- und Entnahmestutzen 28 in den Doppelkammer-Inliner 18 eingesetzt und mit dem Bodenventil 30 auf dem Befüll- und Entnahmestutzen 28 des Inliners 18 festgeschraubt.

Wie in Figur 6 deutlich wird, sind die seitlichen Bohrungen 46 aus vier Richtungen in das Wellrohr 44 eingebracht, so dass sich immer eine Reihe von Bohrungen 46 dicht oberhalb des Inlinerbodens befinden. Dadurch ist sichergestellt, dass auch geringste Mengen an Restflüssigkeit noch aus dem Inliner 18 herausgesaugt werden können, ohne dass die Gefahr besteht, dass sich durch den starken Absaug-Unterdruck die Folie des Inliners 18 vor die Öffnung des Entnahmestutzens ziehen könnte.

Mit der erfindungsgemäßen Ausgestaltung des Palettencontainers 10 mit Doppelkammer-Inliner 18 wird in vorteilhafter Weise eine Druckluft-unterstützte Entleerung von insbesondere hochviskosen zähen Füllgütern wie Fruchtkonzentrat mit Fruchtstücken wesentlich verbessert.

### Bezugsziffernliste

- 10 -: Palettencontainer
- 12 -: Bodenpalette
- 14 -: Gitterrahmen
- 16 -: Gewebehülle
- 18 -: Doppelkammer-Inliner
- 20 -: Bodenplatte
- 22 -: Verlängerung der Bodenplatte
- 24 -: Filmscharnier
- 25 -: doppelseitiges Klebeband
- 26 -: Öffnung in (22)
- 28 -: Befüll- und Entnahmestutzen
- 30 -: Befüll- und Entnahmearmatur
- 32 -: Adapterplatte
- 34 -: geschlossenes Sichtfenster
- 35 -: Gasanschluss
- 36 -: Druckluftkammer
- 38 -: Füllgutkammer
- 40 -: Gurt zum Straffen der Gewebehülle
- 42 -: rohrförmige Restentleerungshilfe
- 44 -: flexibles Wellrohr
- 46 -: seitliche Bohrungen
- 48 -: Flanschrandende

## Patentansprüche

1. Palettencontainer (10) zur Lagerung und zum Transport von aseptischen flüssigen Füllgütern, mit einer Bodenpalette (12), einem darauf befestigten Gitterrahmen (14) aus Metallstäben und einem darin eingehängten Gewebesack bzw. einer kubusförmigen Gewebehülle (16), in der ein bei Befüllung selbstentfaltender flüssigkeitsdichter Inliner (18) aus Kunststoff- und/oder Metallfolie zur Aufnahme des flüssigen Füllguts angeordnet ist, wobei der Inliner einen bodenseitigen Befüll- und Entnahmestutzen (28) aufweist, auf den eine mittels einer Adapterplatte (32) unten am vorderen Gitterrahmen befestigte Befüll- und Entnahmearmatur (30) aufgesetzt ist,
**dadurch gekennzeichnet, dass**
der innerhalb der Gewebehülle (16) angeordnete Inliner (18) für eine gasunterstützte Entleerung als Doppelkammer-Inliner (18) mit einer Kammer (36) zum Einblasen von Druckluft und einer Kammer (38) zur Aufnahme des flüssigen Füllguts ausgebildet ist, wobei der Doppelkammer-Inliner auf einer dünnen steifen Bodenplatte (20) fixiert ist, die innerhalb der Gewebehülle (16) unterhalb des Doppelkammer-Inliners (18) angeordnet ist und wobei die Druckluftkammer (36) auf ihrer Oberseite einen kleinen Stutzen (35) zum Anschließen einer Druckluftleitung und die Füllgutkammer (38) auf ihrer Vorderseite den bodenseitigen Befüll- und Entnahmestutzen (28) aufweist.

2. Palettencontainer nach Anspruch 1,
**dadurch gekennzeichnet, dass**
innerhalb des Doppelkammer-Inliners (18) zwischen der Druckluftkammer (36) und der Füllgutkammer (38) eine Folienwand als Trennwandung ausgebildet ist.

3. Palettencontainer nach Anspruch 2,
**dadurch gekennzeichnet, dass**
die Trennwandung innerhalb des Doppelkammer-Inliners (18) von dessen Oberseite zu dessen Unterseite im unbefüllten Zustand bei in den Gitterrahmen (14) eingehängter Gewebehülle (16) vertikal verlaufend ausgebildet ist.

4. Palettencontainer nach Anspruch 2 oder 3,
**dadurch gekennzeichnet, dass**
im befüllten Zustand des Palettencontainers (10) die Füllgutkammer (38) voll mit flüssigem Füllgut befüllt und die Druckluftkammer (36) vollständig leer ist, während im entleerten Zustand des Palettencontainers (10) die Füllgutkammer (38) vollständig leer und die Druckluftkammer (36) vollständig mit Druckluft befüllt ist, wobei die Trennwandung zwischen der Druckluftkammer (36) und der Füllgutkammer (38) im befüllten Zustand des Palettencontainers (10) vollständig an der Rückseite des Doppelkammer-Inliners (18) anliegt und im entleerten Zustand des Palettencontainers (10) vollständig an der Vorderseite des Doppelkammer-Inliners (18) anliegt.

5. Palettencontainer nach einem der vorhergehenden Ansprüche 1 bis 4,
**dadurch gekennzeichnet, dass**
die dünne Bodenplatte (20) vorderseitig über das Innenmaß innerhalb des Gitterrahmens (14) verlängert ausgebildet ist und diese Verlängerung (22) über ein knickfalzartiges Filmscharnier (24) mit der Bodenplatte (20) verbunden ist.

6. Palettencontainer nach einem der vorhergehenden Ansprüche 1 bis 5,
**dadurch gekennzeichnet, dass**
mittig in einer Verlängerung (22) der dünnen Bodenplatte (20) eine Öffnung (26) vorgesehen ist, durch die der bodenseitige Befüll- und Entnahmestutzen (28) des Doppelkammer-Inliners (18) hindurch gesteckt und von außen befestigt ist.

7. Palettencontainer nach Anspruch 6,
**dadurch gekennzeichnet, dass**
Gewebehülle (16) und innenliegender Doppelkammer-Inliner (18) im flach eingefalteten Anlieferungszustand eine Moduleinheit bilden, wobei die Verlängerung (22), auf die die Befüll- und Entnahmearmatur (30) aufgesetzt ist, mit aufgesetzter Befüll- und Entnahmearmatur (30) flach auf den eingefalteten Doppelkammer-Inliner (18) zurückgelegt bzw. zurückgefaltet ist.

8. Palettencontainer nach Anspruch 7,
**dadurch gekennzeichnet, dass**
im eingesetzten Zustand der Moduleinheit aus Gewebehülle (16) und Doppelkammer-Inliner (18) die äußere Gewebehülle (16) im Gitterrahmen (14) aufgespannt und fixiert ist, wobei die Verlängerung (22) der Bodenplatte (20) um 90 Grad in die Senkrechte hochgeklappt und mittels der hinter die Befüll- und Entnahmearmatur (30) greifende Adapterplatte (32) an der Vorderseite des Gitterrahmens (14) befestigt ist.

9. Palettencontainer nach einem der vorhergehenden Ansprüche 1 bis 8,
**dadurch gekennzeichnet, dass**
der Inliner (18) innenseitig vor der Öffnung des bodenseitigen Befüll- und Entnahmestutzens (28) mit einem Mittel zur verbesserten Restentleerung des Füllguts ausgestattet ist.

10. Palettencontainer nach Anspruch 9,
**dadurch gekennzeichnet, dass**
das Mittel zur verbesserten Restentleerung des Füllguts ein Rohr (42) ist, das als flexibles, aus dünnem Kunststoffmaterial bestehendes Wellrohr (44) mit einer Vielzahl von seitlichen Bohrungen (46) ausgebildet ist.

11. Palettencontainer nach Anspruch 10,
**dadurch gekennzeichnet, dass**
das Wellrohr (44) durch den Befüll- und Entnahmestutzen (28) in den Doppelkammer-Inliner (18) eingesetzt und mit der Befüll- und Entnahmearmatur (30) auf dem Befüll- und Entnahmestutzen (28) des Inliners (18) festgeschraubt ist.

12. Palettencontainer nach einem der vorhergehenden Ansprüche 1 bis 11,
**dadurch gekennzeichnet, dass**
der Doppeikammer-Inliner (18) nicht mit der äußeren Gewebehülle (16) verbunden ist, wobei die dünne Bodenplatte (20) vorderseitig über das Innenmaß innerhalb des Gitterrahmens (14) verlängert ausgebildet ist und diese Verlängerung (22) über ein knickfalzartiges Filmscharnier (24) mit der Bodenplatte (20) verbunden ist, wobei mittig in der Verlägerung (22) eine Öffnung (26) eingebracht ist, durch welche der Entnahmestutzen (28) des Inliners (18) hindurch gesteckt ist, wobei Gewebehülle (16) und innenliegender Dappelkammer-Inliner (18) im flach eingefalteten Anlieferungszustand eine Moduleinheit bilden, wobei die Verlängerung (22) mit aufgesetzter Befüll- und Entnahmearmatur (30) flach auf den eingefalteten Inliners (18) zurückgelegt bzw. zurückgefaltet ist.

## Claims

1. Pallet container (10) for storing and for transporting aseptic liquid filling materials, with a base pallet (12), a lattice frame (14) which is fastened thereon and consists of metal bars, and a fabric bag which is suspended in said lattice frame or a cube-shaped fabric cover (16) in which a liquid-tight inliner (18) which automatically unfolds during filling composed of a plastics film and/or metal foil for receiving the liquid filling material is arranged, wherein the inliner has a base-side filling and removal connection piece (28) to which a filling and removal fitting (30), which is fastened at the bottom to the front lattice frame by means of an adapter plate (32), is attached, **characterized in that** the inliner (18) arranged within the fabric cover (16) is designed, for gas-assisted emptying, as a double chamber inliner (18) with a chamber (36) for blowing in compressed air and a chamber (38) for receiving the liquid filling material, wherein the double chamber inliner is fixed on a thin, stiff base plate (20) which is arranged within the fabric cover (16) below the double chamber inliner (18), and wherein the compressed air chamber (36) has on the upper side thereof a small connection piece (35) for the connection of a compressed air line and the filling material chamber (38) has on the front side thereof the base-side filling and removal connection piece (28).

2. Pallet container according to Claim 1, **characterized in that** a film or foil wall is formed within the double chamber inliner (18) as a separating wall between the compressed air chamber (36) and the filling material chamber (38).

3. Pallet container according to Claim 2, **characterized in that** the separating wall is designed so as to run vertically within the double chamber inliner (18) from the upper side thereof to the lower side thereof in the unfilled state when the fabric cover (16) is suspended in the lattice frame (14).

4. Pallet container according to Claim 2 or 3, **characterized in that**, in the filled state of the pallet container (10), the filling material chamber (38) is completely filled with liquid filling material and the compressed air chamber (36) is completely empty, while in the emptied state of the pallet container (10), the filling material chamber (38) is completely empty and the compressed air chamber (36) is completely filled with compressed air, wherein, in the filled state of the pallet container (10), the separating wall between the compressed air chamber (36) and the filling material chamber (38) bears completely against the rear side of the double chamber inliner (18) and, in the emptied state of the pallet container (10), bears completely against the front side of the double chamber inliner (18).

5. Pallet container according to one of the preceding Claims 1 to 4, **characterized in that** the thin base plate (20) is designed so as to be extended on the front side beyond the internal size within the lattice frame (14) and said extension (22) is connected to the base plate (20) via a film hinge (24) in the manner of a buckling fold.

6. Pallet container according to one of the preceding Claims 1 to 5, **characterized in that** an opening (26) is provided centrally in an extension (22) of the thin base plate (20), through which the base-side filling and removal connection piece (28) of the double chamber inliner (18) is inserted and fastened from the outside.

7. Pallet container according to Claim 6, **characterized in that** fabric cover (16) and double chamber inliner (18) located on the inside form a modular unit in the flat folded-in delivery state, wherein the extension (22), to which the filling and removal fitting (30) is attached, with attached filling and removal fitting (30) is laid back or folded back flat onto the folded-in double chamber inliner (18).

8. Pallet container according to Claim 7, **characterized in that**, in the inserted state of the modular unit consisting of fabric cover (16) and double chamber inliner (18), the outer fabric cover (16) is stretched and fixed in the lattice frame (14), wherein the extension (22) of the base plate (20) is folded upward by 90° into the perpendicular and is fastened to the front side of the lattice frame (14) by means of the adapter plate (32) reaching behind the filling and removal fitting (30).

9. Pallet container according to one of the preceding Claims 1 to 8, **characterized in that** the inliner (18) is equipped on the inner side upstream of the opening in the base-side filling and removal connection piece (28) with a means for the improved residue emptying of the filling material.

10. Pallet container according to Claim 9, **characterized in that** the means for the improved residue emptying of the filling material is a pipe (42) which is designed as a flexible corrugated pipe (44) which is composed of thin plastics material and has a multiplicity of lateral bores (46).

11. Pallet container according to Claim 10, **characterized in that** the corrugated pipe (44) is inserted through the filling and removal connection piece (28) into the double chamber inliner (18) and is screwed to the filling and removal fitting (30) on the filling and removal connection piece (28) of the inliner (18).

12. Pallet container according to one of the preceding Claims 1 to 11, **characterized in that** the double chamber inliner (18) is not connected to the outer fabric cover (16), wherein the thin base plate (20) is designed so as to be extended on the front side beyond the internal size within the lattice frame (14), and said extension (22) is connected to the base plate (20) via a film hinge (24) in the manner of a buckling fold, wherein an opening (26) is introduced centrally in the extension (22), through which the removal connection piece (28) of the inliner (18) is inserted, wherein, in the flat folded-in delivery state, fabric cover (16) and double chamber inliner (18) located on the inside form a modular unit, wherein the extension (22) with attached filling and removal fitting (30) is laid back or folded back flat onto the folded-in inliner (18).

## Revendications

1. Conteneur sur palette (10) pour le stockage et le transport de contenus liquides aseptiques, avec une palette inférieure (12), un cadre en treillis (14) constitué de barres métalliques fixé sur celle-ci et d'un sac en tissu suspendu dans celui-ci ou d'une enveloppe en tissu de forme cubique (16), dans laquelle une doublure (18) étanche au liquide et se déployant automatiquement lors du remplissage, en un film de matière plastique et/ou de métal, est disposée en vue de contenir le contenu liquide, dans lequel la doublure présente du côté du fond un tuyau de remplissage et de prélèvement (28), sur lequel est posée une armature de remplissage et de prélèvement (30) fixée en bas sur le cadre en treillis avant au moyen d'une plaque d'adaptateur (32), **caractérisé en ce que** la doublure (18) disposée à l'intérieur de l'enveloppe en tissu (16) est réalisée, en vue d'une vidange assistée par un gaz, sous la forme d'une doublure à double chambre (18) avec une chambre (36) destinée à l'insufflation d'air comprimé et une chambre (38) destinée à contenir le contenu liquide, dans lequel la doublure à double chambre est fixée sur une mince plaque de fond rigide (20), qui est disposée à l'intérieur de l'enveloppe en tissu (16) en dessous de la doublure à double chambre (18) et dans lequel la chambre à air comprimé (36) présente sur son côté supérieur un petit tuyau (35) destiné à raccorder une conduite d'air comprimé et la chambre de remplissage (38) présente sur son côté avant le tuyau inférieur de remplissage et de prélèvement (28).

2. Conteneur sur palette selon la revendication 1, **caractérisé en ce qu'**une paroi en film est formée en tant que paroi de séparation à l'intérieur de la doublure à double chambre (18) entre la chambre à air comprimé (36) et la chambre de remplissage (38).

3. Conteneur sur palette selon la revendication 2, **caractérisé en ce que** la paroi de séparation est formée à l'intérieur de la doublure à double chambre (18), en direction verticale du côté supérieur de celle-ci à son côté inférieur dans l'état non rempli avec l'enveloppe en tissu (16) suspendue dans le cadre en treillis (14).

4. Conteneur sur palette selon la revendication 2 ou 3, **caractérisé en ce que** dans l'état rempli du conteneur sur palette (10), la chambre de remplissage (38) est entièrement remplie de contenu liquide et la chambre à air comprimé (36) est entièrement vide, tandis que dans l'état vidé du conteneur sur palette (10), la chambre de remplissage (38) est entièrement vide et la chambre à air comprimé (36) est entièrement remplie d'air comprimé, dans lequel la paroi de séparation entre la chambre à air comprimé (36) et la chambre de remplissage (38) est appliquée entièrement sur le côté arrière de la doublure à double chambre (18) dans l'état rempli du conteneur sur palette (10) et est appliquée entièrement sur le côté avant de la doublure à double chambre (18) dans l'état vidé du conteneur sur palette (10).

5. Conteneur sur palette selon l'une quelconque des revendications 1 à 4, **caractérisé en ce que** la mince plaque de fond (20) est prolongée sur le côté avant au-delà de la dimension intérieure à l'intérieur du cadre en treillis (14) et ce prolongement (22) est relié à la plaque de fond (20) au moyen d'une charnière pelliculaire de type repliable (24).

6. Conteneur sur palette selon l'une quelconque des revendications 1 à 5, **caractérisé en ce qu'**il est prévu au milieu dans un prolongement (22) de la mince plaque de fond (20) une ouverture (26), à travers laquelle le tuyau inférieur de remplissage et de prélèvement (28) de la doublure à double chambre (18) est engagé et fixé par l'extérieur.

7. Conteneur sur palette selon la revendication 6, **caractérisé en ce que** l'enveloppe en tissu (16) et la doublure à double chambre (18) placée à l'intérieur forment dans l'état de livraison replié à plat une unité modulaire, dans lequel le prolongement (22), sur lequel l'armature de remplissage et de prélèvement (30) est posée, est remis ou replié à plat sur la doublure à double chambre (18) repliée avec l'armature de remplissage et de prélèvement (30) montée.

8. Conteneur sur palette selon la revendication 7, **caractérisé en ce que** dans l'état utilisé de l'unité modulaire composée de l'enveloppe en tissu (16) et de la doublure à double chambre (18), l'enveloppe en tissu extérieure (16) est tendue et fixée dans le cadre en treillis (14), dans lequel le prolongement (22) de la plaque de fond (20) est relevé de 90 degrés à la verticale et est fixé au côté avant du cadre en treillis (14) au moyen de la plaque d'adaptateur (32) accrochée derrière l'armature de remplissage et de prélèvement (30).

9. Conteneur sur palette selon l'une quelconque des revendications 1 à 8, **caractérisé en ce que** la doublure (18) est équipée sur le côté intérieur, devant l'ouverture du tuyau inférieur de remplissage et de prélèvement (28), d'un moyen permettant d'améliorer la vidange résiduelle du contenu.

10. Conteneur sur palette selon la revendication 9, **caractérisé en ce que** le moyen permettant d'améliorer la vidange résiduelle du contenu est un tube (42), qui est réalisé sous forme de tuyau ondulé flexible (44), constitué d'un matériau mince de matière plastique, avec une multiplicité de trous latéraux (46).

11. Conteneur sur palette selon la revendication 10, **caractérisé en ce que** le tube ondulé (44) est introduit dans la doublure à double chambre (18) à travers le tuyau de remplissage et de prélèvement (28) et est vissé à bloc sur le tuyau de remplissage et de prélèvement (28) de la doublure (18) avec l'armature de remplissage et de prélèvement (30).

12. Conteneur sur palette selon l'une quelconque des revendications 1 à 11, **caractérisé en ce que** la doublure à double chambre (18) n'est pas assemblée à l'enveloppe en tissu extérieure (16), dans lequel la mince plaque de fond (20) est prolongée sur le côté avant au-delà de la dimension intérieure à l'intérieur du cadre en treillis (14) et ce prolongement (22) est relié à la plaque de fond (20) par une charnière pelliculaire de type repliable (24), dans lequel une ouverture (26) est pratiquée au milieu dans le prolongement (22), à travers laquelle le tuyau de prélèvement (28) de la doublure (18) est engagé, dans lequel l'enveloppe en tissu (16) et la doublure à double chambre (18) disposée à l'intérieur forment dans l'état de livraison replié à plat une unité modulaire, dans lequel le prolongement (22) est remis ou replié à plat sur la doublure (18) repliée avec l'armature de remplissage et de prélèvement (30) montée.
